Europäisches Patentamt

European Patent Office

Office européen des brevets

(11) Publication number: **0 391 734**
**A2**

# (12) EUROPEAN PATENT APPLICATION

(21) Application number: **90303726.5**

(22) Date of filing: **06.04.90**

(51) Int. Cl.⁵: **G11B 11/10**

(30) Priority: **06.04.89 JP 87309/89**

(43) Date of publication of application:
**10.10.90 Bulletin 90/41**

(84) Designated Contracting States:
**AT BE CH DE DK ES FR GB GR IT LI LU NL SE**

(71) Applicant: **MITSUI PETROCHEMICAL INDUSTRIES, LTD.**
**2-5, Kasumigaseki 3-chome Chiyoda-ku Tokyo 100(JP)**

(72) Inventor: **Tsuzukiyama, Koji**
**c/o Mitsui Petrochemical Industries, Ltd.**
**3 Chigusa-Kaigan, Ichihara-shi, Chiba(JP)**

(74) Representative: **Myerscough, Philip Boyd et al**
**J.A.Kemp & Co. 14, South Square Gray's Inn London, WC1R 5EU(GB)**

(54) **Magnetooptical recording media and initialization methods thereof.**

(57) A magnetooptical recording medium (2) comprising at least one substrate (10,12), two recording layers (4,6) each having the direction of magnetization perpendicular to the layer surface and a magnetic shield layer (8) interposed between said two recording layers (4,6) and also a method of initialization of said magnetooptical recording medium.

# FIG. 1

# MAGNETOOPTICAL RECORDING MEDIA AND INITIALIZATION METHODS THEREOF

## FIELD OF THE INVENTION

This invention relates to magnetooptical recording media having two recording layers capable of rewriting information recorded therein and to initialization methods thereof.

## BACKGROUND OF THE INVENTION

Magnetooptical recording media have been developed as those typical of the optical recording media having recording layers capable of rewriting information recorded therein.

The magnetooptical recording medium is designed to make it possible to record or erase information by irradiating the recording layer capable of being magnetized in the direction perpendicular to the layer surface to change the direction of magnetization of the irradiated portions of the recording layer.

Before shipment as a product of the magnetooptical recording medium as mentioned above or before recording information afresh in said medium by a disc drive, no information should be recorded therein and, therefore, such magnetooptical recording medium is in need of initialization.

In the conventionally known procedure for effecting initialization of information recorded in a recording layer of the magnetooptical recording medium, the surface of the recording layer is irradiated spot-by-spot with such an energy beam as a laser beam while the energy beam and the recording layer are allowed to move relatively, and consequently the whole surface of the recording layer is irradiated with this energy beam, thereby making the direction of magnetization of the recording layer definite along the layer surface.

Magnetooptical recording media having two magnetooptical recording layers have been developed with the view of recording highly densified information in these recording layers. In initializing the magnetooptical recording medium of the type according to the conventional procedure, there is such a disadvantage that it takes a long period of time to irradiate the recording layers spot-by-spot with the energy beam even when only one recording layer is initialized.

The present applicants have developed, as a procedure for erasing the information recorded in a magnetooptical recording layer in a short period of time, the initialization method wherein a magnetic line of force of high magnetic field is applied from one direction to a magnetooptical recording medium on which the recording layer has been formed, thereby making the direction of magnetization of said recording layer definite along the layer surface.

However, when an optical recording medium having two recording layers is initialized by the method as mentioned above, there is such a disadvantage that the directions of magnetization of the two layers simultaneously become the same along the layer surface and no initialization of only one recording layer can be effected. In this case, moreover, where the directions of magnetizations of the two magnetooptical recording layers point to the same direction, the laser beam for reproduction incident upon each recording layer is applied to from the inverse direction. On that account, in order that the two recording layers are intitialized simultaneously, the directions of magnetization of the two recording layers must be arranged mutually in the inverse direction and in the same direction along the layer surface. Thus, the method as mentioned above failed to satisfy this requirement.

In this connection, Japanese Patent L-O-P No. 244410/1988 discloses a technique of warding off external magnetization by laminating a magnetic shield on the outer surface of the magnetic recording layer provided on the magnetic recording medium. However, this technique as disclosed is simply to ward off the influence of external magnetic field, and fails to disclose at all such a technical idea of the present invention to effect initialization of the magnetooptical recording medium efficiently.

## OBJECT OF THE INVENTION

The present invention has been made in light of such circumstances as mentioned above, and an object of the invention is to provide magnetooptical recording media in which initialization of the information recorded in one of the two recording layers can be effected in a short period of time, and methods of initialization thereof.

## SUMMARY OF THE INVENTION

In order to accomplish the object of the present invention as mentioned above, the magnetooptical recording media of the invention comprising two magnetooptical recording layers having the direction of magnetization perpendicular to the layer surface are characterized in that a magnetic shield layer composed of a magnetic shield material inhibiting permeation of lines of magnetic force is interposed between said two magnetooptical recording layers.

The method of initialization of a magnetooptical recording medium of the invention, which comprises erasing the information recorded in one of the two magnetooptical recording layers having the direction of magnetization perpendicular to the layer surface of the magnetooptical recording medium, is characterized in that a magnetic shield layer composed of a magnetic shield material is interposed between said two magnetooptical recording layers, and lines of magnetic force pointing to one direction are applied to the surface of the recording layer to be initialized from the side of either one of the two recording layers to be initialized, thereby making the direction of magnetization of said recording layer uniform along the layer surface to initialize the information recorded in said recording layer.

In the magnetooptical recording medium and the initialization methods of the invention having a magnetic shield layer interposed between two recording layers and the method of initialization thereof, when lines of magnetic force are applied to the whole of the magnetooptical recording medium from the side of each one of the two recording layers, the magnetic lines of force are shielded by the magnetic shield layer and does not exert any influence upon the other on the opposite side of the medium. Accordingly the direction of magnetization of said recording layer to which the lines of magnetic force have been applied will be forcibly arranged in the same direction along the layer surface (in the layer surface) and only this recording layer can be initialized. Moreover, an operation can be done in a short period of time in order to apply these lines of magnetic force to the whole of the magnetooptical recording medium, so that the initialization of said medium can also be effected in a short period of time. It is preferable that the lines of magnetic force are applied substantially vertically to the surface of the recording layer to be initialized.

Furthermore, the information recorded in both recording layers formed on the magnetooptical recording medium may be initialized simultaneously at a time by applying lines of magnetic force from both sides to these recording layers at a time.

## DETAILED DESCRIPTION OF THE INVENTION

The magnetooptical recording medium of the present invention and the method of initialization thereof are illustrated below in detail with reference to the accompanying drawings.

Fig. 1 is a cross-sectional view showing one embodiment of the magnetooptical recording medium of the present invention.

Fig. 2 is a schematic view showing one embodiment of the method of initialization of the present invention.

Fig. 3 is an oblique view of a means of generating the magnetic lines of force used in the present invention.

Fig.4 is a schematic view showing one embodiment of the method of initialization of the present invention.

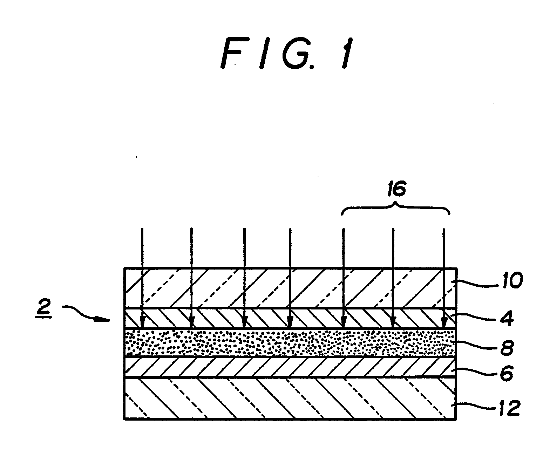

As shown in Fig. 1, a magnetooptical recording medium 2 of the invention has two magnetooptical recording layers 4 and 6 and a magnetic shield layer 8 interposed therebetween. In the embodiment shown in Fig. 1, the magnetooptical recording medium 2 is composed of a laminate of two magnetooptical recording media individually having the recording layers 4 and 6 respectively formed on substrates 10 and 12, said laminate being made so that the magnetic shield layer 8 is interposed between the magnetooptical recording layers 4 and 6. In another embodiment of the invention, the magnetooptical recording medium may be composed of the two magnetooptical recording layers 4 and 6 formed on one substrate and the magnetic shield layer interposed between magnetooptical recording layers 4 and 6.

Though no particular limitation is placed on materials for preparing the above-mentioned substrates 10 and 12, these substrates are desirably transparent substrates, for example, inorganic material such as glass, aluminum or the like, and organic material such as poly(methylmethacrylate), polycarbonate, polymer alloy of polycarbonate and polystyrene, cycloolefin polymers such as those disclosed in U.S. Patent No. 4,614,778, including copolymers of ethylene with 1,4,5,8-dimethano-1,2,3,4,4a,5,8,8a-octahydronaphthalene-(tetracyclododecene), copolymers of ethylene with 2-methyl-1,4,5,8-dimethano-1,2,3,4,4a,5,8,8a-octahydronaphthalene(methyltetracyclododecene), copolymers of ethylene with 2-ethyl-1,4,5,8-dimethano-1,2,3,4,4a,5,8,8a-octahydronaphthalene, poly-4-methyl-1-pentene, epoxy resin, polyether sulfone, polysulfone, polyether imide and the like.

Of these materials as exemplified above, preferred are poly(methylmethacrylate), polycarbonate and cycloolefin polymers disclosed in U.S. Patent No. 4,614,778, and particularly preferred are cycloolefin polymers disclosed in U.S. Patent No. 4,614,778 because of its good adhesion to the recording layer and low double refractive index.

The substrates 10 and 12 may have any thickness so long as it is sufficient to impart appropriate toughness to the whole of the recording medium 2, for example, preferably 0.5-2.5 mm and especially from about 1 to about 1.5 mm.

No particular limitation is placed on materials for the magnetooptical recording layers 4 and 6 having a uniaxial anisotropy perpendicular to the layer surface used in the invention. These recording layers, however, are preferably composed of such materials, for example, as those comprising at least one member selected from among (i) 3d transition metals and at least one member selected from among (iii) rare earth elements, or those comprising at least one member selected from among (i) 3d transition metals and at least one member selected from among (ii) corrosion-resistant metals and (iii) rare earth elements.

The 3d transition metals (i) mentioned above include Fe, Co, Ti, V, Cr, Mn, Ni, Cu and Zn, and preferably used is Fe or Co, or are both of them.

When incorporated into the magnetooptical recording layer 4, the corrosion-resistant metals (ii) can improve this recording layer in oxidation resistance. The corrosion-resistant metals used include Pt, Pd, Ti, Zr, Ta, Mo, Nb and the like. Of these metals, preferred are Pt, Pd and Ti and, in particular, Pt or Pd or both.

The rare earth elements (iii) used include, for example, Gd, Tb, Dy, Ho, Er, Tm, Yb, Lu, La, Ce, Pr, Nd, Pm, Sm and Eu. Of theses elements, preferred are Gd, Tb, Dy, Ho, Nd, Sm and Pr.

Though there is no particular limit to the film thickness, the magnetooptical recording layers of the invention each preferably have a thickness of 50-5000 Å, particularly 100-2000 Å.

The magnetic shield layer 8 used in the invention is composed of a magnetic shield material inhibiting permeation of a magnetic line of force. Useful magnetic shield material includes high permeability materials such as Permalloy (magnetic alloy of Ni-Fe system) and Sendust (magnetic alloy of Si-Al-Fe system), and superconductive materials. The superconductive materials include, by way of illustration but not of limitation, metallic superconductive materials such as NbN, $Nb_3Sn$, $V_3Ga$, $V_3Si$, $Nb_3Al$, and $Nb_3Ge$, ceramic superconductive material systems such as $Ba(Pb, Bi)O_3$, La-Ba-Cu-O, La-Sr-Cu-O, Y-Ba-Cu-O, Y-Ba-Cu-O, Y-Ba-Cu-O-F, Bi-Ca-Sr-Cu-O and Tl-Ca-Ba-Cu-O and organic superconductive materials such as TTF (Tetrathiafulvalene)-X type (wherein X is anion), (TMTSF (Tetramethyltetraselenafulvalene))$_2$-X type and (BEDT TlF)-X type (BEDT: Bis(ethylenedithio)-tetrathiafulvalene).

A film thickness of the magnetic shield layer, though it is not particularly limited, is preferably 1000 Å to 0.5 mm or thereabouts. The magnetooptical recording media 2 to be initialized by the method of the present invention may have any shape without particular limit such as a card, sheet, disc or the like ,

In the present invention, the information recorded in each magnetooptical recording layer of the magnetooptical recording medium 2 may be initialized by erasing said information by the following procedure.

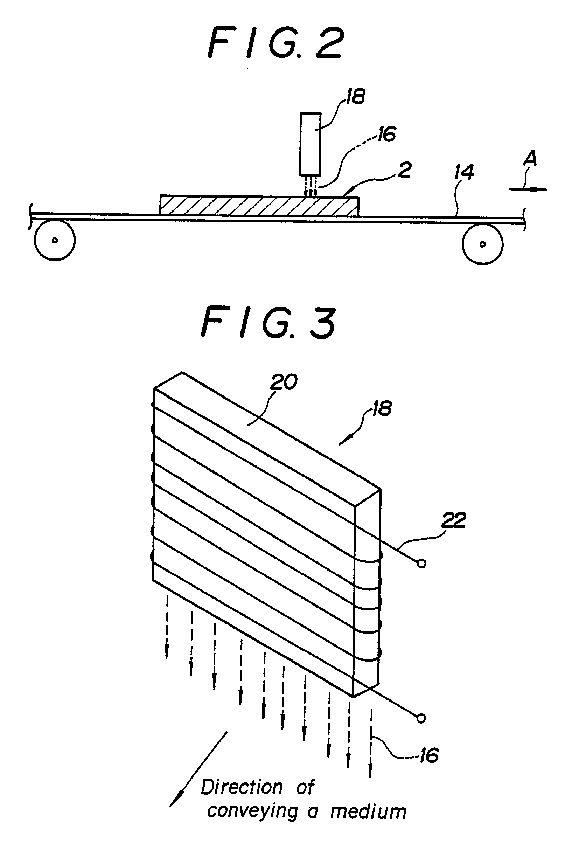

As shown in Fig. 2, the magnetooptical recording medium 2 having formed thereon the magnetooptical recording layers 4 and 6 is placed, prior to initialization, for example, on a belt 14. The belt 14 is designed to be conveyed in the direction of an arrow.

A magnetic force generating means 18 which emits lines of magnetic force 16 in the direction of the surface of one side of the magnetooptical recording medium 2 is arranged in the position directly above the belt 14 for conveying said magnetooptical recording medium 2.

The lines of magnetic force 16 emitted from the magnetic force generation means 18 are designed to intersect almost perpendicularly the surface of the belt 14 moving in the direction of the arrow A.

The magnetic force generating means 18 used includes, for example, an electromagnet and permanent magnet, preferably such an electromagnet as shown in Fig. 3. In the electromagnet shown in Fig. 3, a coil 22 is wound around a core portion 20 composed of a conductive material. As shown in Fig. 1, the core portion 20 preferably has the shape of a flat plate positioned along the lines of magnetic force emitted at a right angle to the direction of the medium to be conveyed. The magnetic force generating means have the above-mentioned shape so that the intended initialization can be effected less in number of turns of the coil 22 and less in an amount of the current consumed.

The magnetic field emitted by the magnetic force generating means 18 may have an intensity to any extent, so long as its intensity is sufficient to arrange forcibly the direction of magnetization of one recording layer 4 of the magnetooptical recording medium 2 uniform in one direction, and the intensity employed is preferably from 5 kOe to 20 kOe. The lines of magnetic force emitted from the magnetic force generating means 18 may be directed from top to bottom as shown in Fig. 2 or may be directed from bottom to top.

According to the method of initialization of one embodiment of the present invention, one recording layer 4 of the magnetooptical recording medium 2 is irradiated with a strong line of magnetic force 16 by means of the magnetic force generating means 18, and the magnetooptical recording medium 2 is moved relatively by means of the belt 14 to the direction almost perpendicular to the line of magnetic force emitted. Therefore, the whole of the one recording layer 4 is magnetized to one direction during this relative movement, and initialization of this recording layer 4 can be effected in a short period of time.

In that case, moreover, the information recorded in the magnetooptical recording layer 6 on the opposite side of the magnetooptical recording medium 2 will not be initialized, because the line of magnetic force 16 is shielded by the magnetic shield layer 8. The recording layer 6 may be initialized by the same procedure as mentioned above after turning the magnetooptical recording medium 2 over the belt 14.

In the method of the present invention, the line of magnetic force may be applied to one side of the magnetooptical recording medium by various means without being limited to the procedure as mentioned above.

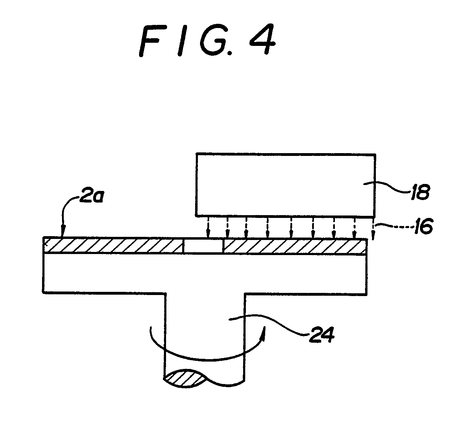

For example, when the recording layer on one side of a disc magnetooptical recording medium 2a shown in Fig. 4 is intialized, this disc magnetooptical recording medium 2a is placed on a rotating table 24 used as a rotating means, the line of magnetic force 16 emitted from the magnetic force generating means 18 is applied at least to the whole area of one side of the magnetooptical recording medium 2 in the radial direction while rotating this rotating table 24. In this case, the initialization of the recording layer on one side of the magnetooptical recording medium 2a is completed by rotating the rotating table by one round turn.

In this connection, the magnetooptical recording medium 2 may be moved relatively in the direction almost perpendicular to the lines of magnetic force 16 by various means such as a chain, a robot arm, an air cylinder and the like without being limited to the belt 14 or rotating table 24. Alternatively, the magnetic force generating means 18 may be moved relatively in an appropriate manner without moving the magnetooptical recording medium 2. Furthermore, the information recorded in two recording layers formed on the magnetooptical recording medium may be initialized simultaneously by applying the lines of magnetic force to these recording layers at a time from both sides of said recording medium.

## Claims

1. A magnetooptical recording medium (2) having two magnetooptical recording layers (4,6) each having the direction of magnetization perpendicular to the layer surface, characterised in that a magnetic shield layer (8) composed of a magnetic shield material inhibiting the permeation of lines of magnetic force therethrough is interposed between said magnetooptical recording layers (4,6).

2. A medium according to claim 1 wherein the magnetic shield layer (8) is composed of a superconductive material.

3. A method of initialization of a magnetooptical recording medium (2) which comprises erasing the information recorded in at least one of two recording layers (4,6) each having the direction of magnetization perpendicular to the layer surface of said magnetooptical recording medium (2), characterised by interposing a magnetic shield layer (8) composed of a magnetic shield material inhibiting the permeation of lines of magnetic force therethrough between said two recording layers (4,6), and applying a directional magnetic force to each recording layer to be initialized so as to make the direction of magnetization thereof uniform along the layer surface to initialize the recorded information.

4. A method according to claim 3 wherein the intensity of a magnetic field emitted from a magnetic force generating means generating the directional magnetic force is from 5 to 20 kOe.

5. A method according to claim 3 or 4 wherein the directional magnetic force is applied to one side of the magnetooptical recording medium while rotating it.

6. A method according to claim 3, 4 or 5 wherein a directional magnetic force is simultaneously applied to both sides (4,6) of the magnetooptical recording medium (2) to initialize recorded information on both sides.

7. A method according to any one of claims 3 to 6 wherein the lines of magnetic force are substantially vertically applied to the surface of the magnetooptical recording medium.

# F I G. 1

16

2 →

10

4

8

6

12

# F I G. 2

18
16
2
14
A

# F I G. 3

20
18
22
16

Direction of
conveying a medium

# FIG. 4